(19) Europäisches Patentamt
European Patent Office
Office européen des brevets

(11) **EP 2 508 657 B1**

(12) **EUROPEAN PATENT SPECIFICATION**

(45) Date of publication and mention
of the grant of the patent:
**24.05.2017 Bulletin 2017/21**

(21) Application number: **10834645.3**

(22) Date of filing: **03.12.2010**

(51) Int Cl.:
***D01F 6/84*** *(2006.01)*          ***C08G 63/183*** *(2006.01)*

(86) International application number:
**PCT/JP2010/071664**

(87) International publication number:
**WO 2011/068195 (09.06.2011 Gazette 2011/23)**

(54) **POLYESTER FIBERS DYEABLE AT ORDINARY PRESSURE AND PROCESS FOR PRODUCING SAME**

BEI NORMALEM DRUCK FÄRBBARE POLYESTERFASERN SOWIE HERSTELLUNGSVERFAHREN DAFÜR

FIBRES DE POLYESTER POUVANT ÊTRE TEINTES À PRESSION ORDINAIRE ET LEUR PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2009 JP 2009276240**

(43) Date of publication of application:
**10.10.2012 Bulletin 2012/41**

(73) Proprietor: **Kuraray Co., Ltd.**
**Okayama 710-0801 (JP)**

(72) Inventors:
• **OKA, Kazuhide**
**Kurashiki-shi**
**Okayama 713-8550 (JP)**
• **NAKADA, Hiroyuki**
**Kurashiki-shi**
**Okayama 713-8550 (JP)**
• **KAWAMOTO, Masao**
**Kurashiki-shi**
**Okayama 710-0801 (JP)**
• **TANAKA, Kazuhiko**
**Osaka-shi**
**Osaka 530-8611 (JP)**

(74) Representative: **D Young & Co LLP**
**120 Holborn**
**London EC1N 2DY (GB)**

(56) References cited:
**EP-A1- 2 096 140      WO-A1-00/23530**
**JP-A- 7 189 036      JP-A- 2004 043 722**
**JP-A- 2005 126 842**

**Description**

TECHNICAL FIELD

The present invention relates to a polyester fiber and a method for dyeing the same. More specifically, the invention relates to a polyester fiber having excellent properties in deep color property and fastness property when dying the fiber under a normal pressure environment.

BACKGROUND ART

Polyester fibers are used in various fields typified by clothing applications because of their properties such as mechanical properties, color development, and handling. However, polyester fibers are generally inferior in dyeability because of their dense fiber structure; especially when disperse dyes are used, it is difficult to obtain good color development and fastness property unless such fibers are put under high temperature of 130°C and high pressure or a carrier of an organic solvent is used.

On the other hand, there has been demanded a technology for producing a polyester mixed product having good dyeing properties by mix-knitting or mix-weaving a polyester fiber with a material other than polyester, such as wool, cotton, acrylics and polyurethane, without using complicated steps; in this case, in order to provide sufficient dyeing properties to a polyester fiber, dyeing processing under high temperature of about 130°C and high pressure is needed. However, since the material mix-knitted or mix-woven with the polyester fiber is degraded under the environment, there have been required development of a polyester fiber having good dyeing properties even under, for example, a normal pressure environment, more specifically, under 100°C or lower.

For this reason, methods of improving dyeability through modification of a polyester resin have been studied in large numbers; especially, there have been proposed many inventions by which a polyester fiber which can be dyed easily with cation dyes and disperse dyes under normal pressure can be produced by copolymerizing a metal sulfonate group as a dicarboxylic acid component (Patent Documents 1 to 3). Components generally used as the metal sulfonate group are a 5-sodium sulfoisophthalic acid component, a 5-potassium sulfoisophthalic acid component, and the like. For example, Patent Document 2 discloses a polyester fiber in which a 5-sodium sulfoisophthalic acid component and an adipic acid component are copolymerized. It has been reported that by copolymerizing such a metal sulfonate group and the like and then processing the resultant into a fiber, it allows a fiber internal structure to hold amorphous parts in comparison with conventional polyester fibers. It has been reported that, as a result, a polyester fiber can be obtained which is capable of being normal pressure dyed with disperse dyes and cation dyes and superior in fastness. However, the fibers produced by copolymerizing such metal sulfonate group components and the like tend to become lower in strength in comparison with conventional polyester fibers and also they are inferior in high-speed spinnability in a yarn producing step. Moreover, there are disadvantages that such fibers exhibit high alkali weight loss rates; in some yarn forms of original spun yarns, a woven and knitted fabric subjected to alkali weight loss readily comes to have cracks in its fiber surface and quality defects such as powder dropping readily occur. For this reason, since alkali weight loss is difficult even basically in use of the yarn by itself, not only it is impossible to obtain woven and knitted fabrics of good feeling but also processing conditions are greatly limited even in, for example, combined filament yarns with cotton in which mercerization is performed.

Moreover, Patent Document 4 discloses a polyester-based conjugate fiber including a polyester A, as a core component, containing ethylene terephthalate units as main repeating units and a polyester B, as a sheath component, containing ethylene terephthalate units as main repeating units and obtained by being copolymerized with 5 to 30 mol% of cyclohexanedicarboxylic acid, wherein the glass transition temperature of the polyester B is lower than the glass transition temperature of the polyester A. Polyester-based conjugate fibers obtained in such a way are reported to be superior in dyeability and deep color property. However, the dyeability under a normal pressure environment may be insufficient in some cases and therefore improvement has been desired.

PRIOR ART DOCUMENTS

PATENT DOCUMENTS

Patent Document 1: JP 6-184820 A
Patent Document 2: JP 2000-355831 A
Patent Document 3: JP 2003-301328 A
Patent Document 4: JP 7-189036 A

SUMMARY OF THE INVENTION

PROBLEM TO BE SOLVED BY THE INVENTION

The present invention solves the problems associated with such conventional technologies and an object thereof is to provide a polyester fiber that exhibits deep color property to disperse dyes under a normal pressure environment and is superior in color fastness to washing and color fastness to light and can secure good spinnability and can maintain sufficiently high strength at break even after an alkali weight loss treatment, as well as a method for producing the same.

MEANS FOR SOLVING THE PROBLEMS

In view of the above-mentioned problems, the present invention provides the following inventions. That is, there is provided a fiber made of a polyester resin, wherein the polyester resin is a copolymer comprising a dicarboxylic acid component and a glycol component; of the dicarboxylic acid component, 80 mol% or more is accounted for by a terephthalic acid component, 4.0 to 12.0 mol% is accounted for by a cyclohexane dicarboxylic acid component, and 2.0 to 8.0 mol% is accounted for by an adipic acid component; and the glycol component contains an ethylene glycol component as a main component thereof.

At this time it is preferred that a glass transition temperature (Tg) and a crystallization temperature (Tch) of the polyester resin satisfy the following (a) to (c):

(a) glass transition temperature (Tg): $60°C \leq Tg \leq 80°C$,
(b) crystallization temperature (Tch) : $120°C \leq Tch \leq 150°C$,
(c) $\Delta T$ (Tch - Tg): $50°C \leq \Delta T$ (Tch - Tg) $\leq 80°C$.

It is preferred to satisfy the following requirements (d) to (f):

(d) a degree of exhaustion at 95°C is 70% or more and a degree of exhaustion at 100°C is 90% or more,
(e) a color fastness to washing in dyeing at 100°C of discoloration, that of attachment staining, and that of liquid staining are grade 4 or higher,
(f) a color fastness to light in dyeing at 100°C is grade 4 or higher.

Moreover, it is preferred that a retention of strength at break after a 15% alkali weight loss treatment is 90% or higher.

Described is also a method for producing the above-mentioned fiber comprising carrying out the following steps (1) to (5) in this order:

(1) the step of melt-spinning the polyester resin through a spinneret,
(2) the step of cooling a melt-spun thread made of the polyester resin once to a glass transition temperature thereof or lower,
(3) the step of running the thread within a tube type heating apparatus, thereby applying a heat-stretching treatment thereto,
(4) the step of providing an oil to the thread obtained by the heat-stretching treatment,
(5) the step of winding the thread at a rate of 3500 to 5500 m/minute.

Moreover, there is provided a method for dyeing a polyester fiber, comprising dyeing the above-mentioned polyester fiber a using a disperse dye under normal pressure at 95 to 100°C.

EFFECT OF THE INVENTION

According to the present invention, there is provided a polyester fiber that is superior in normal pressure dyeability and also superior in color fastness to washing and color fastness to light and that has good spinnability. Moreover, the polyester fiber of the present invention is suitable for garments because it can maintain sufficient strength at break even after an alkali weight loss treatment.

MODE FOR CARRYING OUT THE INVENTION

Hereafter, modes for carrying out the present invention are described specifically. The polyester resin to be used in the present invention is a polyester including ethylene terephthalate units as main repeating units; of the dicarboxylic acid components, 80 mol% or more is accounted for by a terephthalic acid component, 4.0 to 12.0 mol% is accounted for by a cyclohexanedicarboxylic acid component, and 2.0 to 8.0 mol% is accounted for by an adipic acid component.

In the case where a cyclohexanedicarboxylic acid component and an adipic acid component are copolymerized with a polyethylene terephthalate, a fiber that is superior in color fastness to light while securing a high degree of exhaustion can be obtained because of a feature that disorder of crystal structure is small in comparison with other aliphatic dicarboxylic acid components.

Copolymerization of the cyclohexanedicarboxylic acid component causes disorder in the crystal structure of the polyester fiber, so that the orientation of amorphous parts lowers. Accordingly, it becomes easy for disperse dyes to penetrate into the internal part of the fiber, so that it is possible to increase the normal pressure dyeability of the disperse dyes. Moreover, since the cyclohexanedicarboxylic acid component exhibits a smaller effect to disorder a crystal structure in comparison with other aliphatic dicarboxylic acid components, a polyester fiber superior also in color fastness to light is obtained.

If the amount of the cyclohexanedicarboxylic acid component copolymerized is less than 4.0 mol% of the dicarboxylic acid components, the degree of orientation of amorphous parts in the internal part of the fiber increases, so that the dyeability to the disperse dyes under a normal pressure environment becomes insufficient and a desired degree of exhaustion is not be obtained. The amount of the cyclohexanedicarboxylic acid component copolymerized is preferably 5.0 mol% or more. On the other hand, if the amount of the cyclohexanedicarboxylic acid component copolymerized exceeds 12.0 mol% of the dicarboxylic acid components, good quality can be secured with respect to dyeability, such as degree of exhaustion, color fastness to washing, or color fastness to light. However, when a yarn is produced by a high-speed spinning technique without stretching, spontaneous extension occurs during high-speed winding because of the low glass transition temperature of a resin and a low degree of orientation of amorphous parts in internal parts of a fiber, so that stable high-speed stringiness cannot be obtained. The amount of the cyclohexanedicarboxylic acid component copolymerized is preferably 10.0 mol% or less.

The cyclohexanedicarboxylic acid, which is a raw material of the polyester resin to be used for the present invention, includes three positional isomers, namely, 1,2-cyclohexanedicarboxylic acid, 1,3-cyclohexanedicarboxylic acid, and 1,4-cyclohexanedicarboxylic acid. Any one positional isomer may be copolymerized or alternatively a plurality of positional isomers may be copolymerized from the viewpoint of obtaining the effect of the present invention. Although each positional isomer has cis/trans isomers, any stereoisomer may be copolymerized or alternatively both cis/trans positional isomers may be copolymerized. A cyclohexanedicarboxylic acid derivative capable of forming an ester may be used instead of cyclohexanedicarboxylic acid.

Like the cyclohexanedicarboxylic acid component, an adipic acid component also causes disorder in the crystal structure of a polyester fiber and lowers the orientation of amorphous parts, so that it becomes easy for disperse dyes to penetrate into the internal part of the fiber and, as a result, it is possible to increase the normal pressure dyeability of the disperse dyes.

Moreover, if the adipic acid component is copolymerized with a polyethylene terephthalate, this has an effect also on low-temperature settability, and when fibers obtained by the present invention are processed into a woven and knitted fabric and then thermally set for form stability, it is possible to lower the thermally setting temperature. Low-temperature settability is a preferable physical property in knitting applications; when combining with materials other than polyester, such as wool, cotton, acrylics, and polyurethane, it is possible to control the temperature necessary for thermal setting so that the physical properties of the materials other than polyester may not be deteriorated. Also in sole use of a polyester fiber, it is possible to adapt the fiber to general existing facilities for knitting and expansion of applications can be expected.

If the amount of the adipic acid component copolymerized in the dicarboxylic acid component is less than 2.0 mol%, dyeability to disperse dyes under a normal pressure environment becomes insufficient, so that a desired degree of exhaustion cannot be obtained. Preferably, the amount of the adipic acid component copolymerized is 3. 0 mol% or more. On the other hand, when the amount of the adipic acid component copolymerized in the dicarboxylic acid component exceeds 8.0 mol%, the degree of exhaustion becomes high. However, when a yarn is produced by a high-speed spinning technique without stretching, the degree of orientation of amorphous parts in internal part of a fiber becomes lower, so that spontaneous extension during high-speed winding occurs remarkably, resulting in failure to obtain stable high-speed spinnability. Preferably, the amount of the adipic acid component copolymerized is 6.0 mol% or less.

It is preferred that the glass transition temperature (Tg) and the crystallization temperature (Tch) of the polyester resin in the present invention satisfy the following (a) to (c) :

    (a) glass transition temperature (Tg) : $60°C \leq Tg \leq 80°C$
    (b) crystallization temperature (Tch) : $120°C \leq Tch \leq 150°C$
    (c) $\Delta T$ (Tch - Tg): $50°C \leq \Delta T$ (Tch - Tg) $\leq 80°C$.

As long as the normal pressure dyeability or quality of the polyester fiber of the present invention is not impaired, dicarboxylic acid components other than the terephthalic acid component, the cyclohexanedicarboxylic acid component, and the adipic acid component may be copolymerized. Specifically, a single species or a plurality of species of aromatic dicarboxylic acid components such as an isophthalic acid component and a naphthalene dicarboxylic acid component, or aliphatic dicarboxylic acid components such as an azelaic acid component and a sebacic acid component, may be copolymerized in an amount of 10.0 mol% or less in total.

However, copolymerization of such components may not only complicate a transesterification reaction and a polycondensation reaction, but also may lower color fastness to washing if the amount copolymerized exceeds an appropriate range. Specifically, if an isophthalic acid component is copolymerized in an amount exceeding 10 mol% relative to the dicarboxylic acid component, color fastness to washing may lower; therefore it is preferable to use the isophthalic acid component in an amount of 5 mol% or less, and more preferably 0 mol% (in other words, not copolymerized).

On the other hand, the polyester fibers well known generally as those having a feature of normal dyeable type are polyester fibers with metal sulfonate groups copolymerized. Especially, a 5-sodium sulfoisophthalic acid component or a 5-potassium sulfoisophthalic acid component is in wide use. It has been reported that this allows a fiber internal structure to hold amorphous parts in comparison with conventional polyester fibers and, as a result, normal pressure dyeing can be carried out to disperse dye and cationic dyes and polyester fibers superior in fastness can be obtained. However, the polyester fibers produced by copolymerizing such metal sulfonate group components tend to become lower in strength in comparison with conventional polyester fibers and also they are inferior in high-speed spinnability in a yarn producing step. Moreover, such fibers exhibit high alkali weight loss rates; in some yarn forms of original spun yarns, a woven and knitted fabric subjected to an alkali weight loss treatment readily comes to have cracks in its fiber surface and, as a result, there are disadvantages that great deterioration in strength may occur or quality defects such as powder dropping readily occur. For this reason, since alkali weight loss is difficult even basically in sole yarn use, not only it is impossible to obtain woven and knitted fabrics of good feeling but also processing conditions are greatly limited even in, for example, combined filament yarns with cotton in which mercerization is performed.

In limited applications in which qualities such as feeling are not required, metal sulfonate groups may be copolymerized in a ratio of 2.0 mol% or less of the dicarboxylic acid component. In the case of use generally in clothing applications in which not only superior dyeability under normal pressure but also such properties as high strength, alkali resistance and high spinnability are needed, the amount of the metal sulfonate group copolymerized is desirably 1.0 mol% or less, and more desirably 0 mol% (in other words, not copolymerized).

Moreover, in the polyester fiber of the present invention, matting agents such as titanium oxide, barium sulfate, and zinc sulfide, heat stabilizers such as phosphoric acid and phosphorous acid, or light stabilizers, antioxidants, and surface treating agents such as silicon oxide, and the like may be contained as additives. Because of the use of silicon oxide, the resulting fiber can be provided with fine irregularities on its surface after weight loss processing and therefore deep color will be realized when being processed into a woven and knitted fabric later. Moreover, the use of a heat stabilizer can suppress thermal decomposition in heat melting or following heat treatment. Furthermore, the use of a light stabilizer can enhance the light resistance of a fiber in its use, whereas the use of a surface treating agent can also enhance dyeability.

Such additives may be added in advance to a polymerization system when a polyester resin is obtained by polymerization. Generally, however, addition in a late stage of polymerization is preferred for antioxidants and the like, and addition in such a manner is preferred particularly in the case where the polymerization system is adversely influenced or in the case where the additive is deactivated under polymerization conditions. On the other hand, addition during polymerization is preferred for matting agents, heat stabilizers and the like because they are thereby easily dispersed uniformly in a resin polymer.

The polyester resin in the present invention preferably has an intrinsic viscosity of 0.6 to 0.7, more preferably 0.62 to 0.68, and even more preferably 0.63 to 0.66. When the intrinsic viscosity exceeds 0.7, the high-speed spinnability in fiber formation becomes very poor. Moreover, even if it is possible to perform spinning and a desired degree of exhaustion is achieved, uneven dyeing or streaks will occur in tubular knitted dyed fabrics or feeling of woven and knitted fabrics will become poor, so that surface quality of the resulting woven and knitted fibers will deteriorate and therefore such fabrics are undesirable for clothing applications. When the intrinsic viscosity is lower than 0.6, yarns become easy to break during spinning, resulting in decrease in productivity, and the strength of the resulting fibers will also decrease. Moreover, even if it is possible to perform spinning and a desired degree of exhaustion is achieved, uneven dyeing or streaks will occur in tubular knitted dyed fabrics or feeling of woven and knitted fabrics will become poor, so that surface quality of the resulting woven and knitted fibers will deteriorate and therefore such fabrics are undesirable for clothing applications.

In the spinning step in the method for producing a polyester fiber of the present invention, a polyester resin is spun through a spinneret by using a usual melt spinning apparatus. The cross-sectional shape or the diameter of a fiber to be obtained can be set arbitrarily by the shape or size of the spinneret.

The polyester resin in the present invention is melt-kneaded by using, for example, a single screw extruder or a twin screw extruder. The temperature used in melt-kneading may vary depending upon the amounts of the cyclohexanedicarboxylic acid component and the adipic acid component copolymerized; however, in order to perform melt-kneading stably without unevenness and obtain stable yarn producing properties and quality, it is preferred to carry out melt-extrusion within a temperature range of from 30 to 60°C higher than the melting point of the polymer and it is more preferred to carry out melt-extrusion within a temperature range of 20 to 50°C higher than the melting point of the polymer. Moreover, the melting temperature used from passing through the kneading facility to reaching the spinning head cannot be specified generally because it may vary depending upon the amounts of the cyclohexanedicarboxylic acid component and the adipic acid component copolymerized; however, in order to spin out the resin in a stable state without occurrence of melting unevenness and obtain stable yarn producing properties and quality, it is preferred to carry out melt-extrusion within a temperature range of from 30 to 60°C higher than the melting point of the polymer and it is more preferred to carry out melt-extrusion within a temperature range of 20 to 50°C higher than the melting point of the polymer.

Then, the polyester fiber melt-spun by the above-described procedure is cooled once to its glass transition temperature or lower, preferably to a temperature that is at least 10°C lower than the glass transition temperature. The cooling method and the cooling apparatus to be used in this case may be any method and any apparatus capable of cooling the spun polyester fiber to its glass transition temperature or lower and are not particularly limited. It is preferred to provide a cooling wind blowing apparatus such as a cooling wind blowing pipe, under the spinneret and blow cooling wind to a polyester fiber having been spun out, thereby cooling the fiber to its glass transition temperature or lower. In such a case, cooling conditions such as the temperature and humidity of the cooling wind, the blowing rate of the cooling wind, and the angle at which the cooling wind is blown to the spun thread are not particularly limited, and any conditions may be permitted as long as the polyester fiber having been spun out from the spinneret can be cooled rapidly and uniformly to the glass transition temperature or lower while being prevented from swaying of the fiber. Especially, from the viewpoint of smoothly obtaining a polyester fiber of high quality, it is preferred to adjust the temperature of the cooling wind to 20 to 30°C, the humidity of the cooling wind to 20 to 60%, the rate of blowing the cooling wind to 0.4 to 1.0 m/second, and perform the cooling of a spun polyester fiber with the direction of blowing the cooling wind being perpendicular with respect to the spun fiber. When cooling is performed under the above-described conditions by using a cooling wind blowing pipe, it is preferred to arrange the cooling wind blowing pipe having a length of about 80 to about 120 cm, immediately below the spinneret with a slight gap or with no gap.

Next, as a method for obtaining a stretched yarn of stable quality with more efficient productivity, a stretched yarn can be obtained by cooling a thread once to its glass transition temperature or lower after its spinning, then subjecting the thread to a heat-stretching treatment by successively running the thread directly within a heating section, specifically such an apparatus as a tube type heating apparatus, and winding the thread at a rate of 3500 to 5500 m/minute after the oil providing. The heating temperature in the heating step is required to be a temperature at which stretching is attained easily, that is, a temperature of the glass transition temperature or higher and the melting point or lower, and specifically, it is preferably at least 30°C, and more preferably at least 50°C higher than the glass transition temperature. In addition, it is preferably at least 20°C, and more preferably at least 30°C lower than the melting point. According to the above description, the thread cooled to the glass transition temperature or lower in the cooling step is heated in the heating apparatus and thereby molecular motion is promoted and activated, so that a stretched yarn can be obtained.

It is preferred to provide an oil after passing the yarn through the stretching treatment step by the heating apparatus. This makes yarn breakage in stretching small. As the oil, any oil usually used for spinning of polyester can be used without any limitation. As the method of providing the oil, any of oiling nozzle oil providing by a gear pump system or oiling roller oil providing can be used. It is noted that the former system tends to be able to achieve oil attachment evenly and stably to yarns with an increase in spinning rate. The amount of the oil attached is not particularly limited and it may be adjusted appropriately as long as it is within a range suitable for an effect to suppress yarn breakage or fluff of raw yarns and a step of woven and knitted fabrics. Especially, it is preferred to adjust the amount of the oil attached to 0.3 to 2.0% because polyester fibers of high quality can be obtained smoothly and it is more preferred to adjust the amount to 0.3 to 1.0%.

It is preferred to wind the polyester fiber obtained in the above-described series of steps at a rate of 3500 to 5500 m/minute. If the rate of winding the polyester fiber is lower than 3500 m/minute, the productivity will decrease and stretching of the fiber will not be carried out sufficiently in the heating section, so that the mechanical properties of the resulting polyester fiber may deteriorate. If the rate of winding the polyester fiber exceeds 5500 m/minute, stable high-speed spinnability is difficult to be achieved and stretching of the fiber will not be carried out sufficiently in the heating section, so that the mechanical properties of the resulting polyester fiber may deteriorate. The winding rate is more preferably 4000 to 5000 m/minute.

As to the degree of exhaustion of the polyester fiber to be obtained by the present invention, it is preferred that the degree of exhaustion at 95°C be 70% or higher and the degree of exhaustion at 100°C be 90% or higher. When dropping below such degrees of exhaustion, such fibers are undesirable for general clothing applications because sufficient degree of exhaustion cannot be obtained by using dyes by which a fiber can be easily dyed, such as medium or low molecular weight dyes (SE to E types). Moreover, even if being mix-knitted or mix-woven with a material other than polyester, such as wool, cotton, acrylics, and polyurethane, it may become difficult to obtain sufficient dyeability under a normal pressure environment.

It is preferred for the polyester fiber obtained by the present invention that the color fastness to washing of discoloration, that of attachment staining, and that of liquid staining are grade 4 or higher. If any of the color fastness to washing of discoloration, that of attachment staining, and that of liquid staining is grade 3 or lower, such a fiber is undesirable for general clothing applications from the viewpoint of handling.

The polyester fiber to be obtained by the present invention preferably has a color fastness to light of grade 4 or higher. When the color fastness to light is grade 3 or lower, the fiber is undesirable for general clothing applications from the viewpoint of handling.

The polyester fiber to be obtained by the present invention preferably has a retention of strength at break after a 15% alkali weight loss treatment of 90% or higher. When the retention of strength at break is lower than 90%, yarn quality after alkali weight loss deteriorates and therefore process failure in yarn processing or quality defects of products will occur and the fiber is undesirable for general clothing applications.

The polyester fiber of the present invention is not limited to stretched yarns produced by the above-described production method, and an optimum spinning method may be chosen in order to secure quality to be required in final products or good process passability. More specifically, there can also be adopted a spin draw system or a 2-Step system in which an original spun yarn is taken and then it is stretched in a separate step. Moreover, also in a system in which an unstretched yarn is wound as it is at a winding rate of 2000 m/minute or more without stretching the unstretched yarn, a polyester product with good normal pressure dyeability quality can be obtained by passing the yarn through arbitrary yarn processing steps and then finishing the resultant as a product.

According to the present invention, a polyester fiber can be provided which can be dyed with excellent deep color property and fastness property in dyeing under a normal pressure environment and which can offer stable quality and processing performance also by a direct spinning stretching method or other general melt-spinning methods. Specifically, since the normal pressure dyeable polyester fiber of the present invention has no inferior quality comparable to that of conventional polyester fibers, it can be used effectively for a wide range of general clothing, such as men's and women's formal or casual clothing applications, sports applications, and uniforms applications. Moreover, good dyeability and yarn quality can be secured for combined filament yarns with a material other than polyester fibers which require normal pressure dyeing. Furthermore, it can be also used effectively for general material applications including interior material applications for automobiles, aircrafts, and the like; living material applications such as shoes and bags; industrial material applications such as curtains and carpets; and the like.

EXAMPLES

The present invention will be described in detail below with reference to Examples; however, they do not limit the invention. Evaluation of the amounts of dicarboxylic acid components copolymerized, glass transition temperature, melting point, and intrinsic viscosity of a polyester resin, the degree of exhaustion, K/S, and fineness of fibers to be obtained by the present invention, and physical properties of the fibers were carried out in accordance with the following methods.

<Amount of dicarboxylic acid component copolymerized>

The polyester fiber was dissolved in a deuterated trifluoroacetic acid solvent in a concentration of 5.0 wt%/vol and then the amount thereof copolymerized was measured by using a 500 MHz 1H-NMR apparatus (nuclear magnetic resonance apparatus LA-500 manufactured by JEOL) at 50°C.

<Glass transition temperature>

Glass transition temperature was measured at a temperature increase rate of 10°C/minute by using a differential scanning calorimeter (DSC-60) manufactured by SHIMADZU CORPORATION.

<Crystallization temperature>

A resin was heated at a temperature increase rate of 20°C/minute up to 280°C by using a differential scanning calorimeter (DSC-60) manufactured by SHIMADZU CORPORATION to be melted, followed by rapid cooling, and then crystallization temperature was measured at a temperature increase rate of 10°C/minute.

<Intrinsic viscosity>

Intrinsic viscosity was measured by using an Ubbelohde's viscometer (model "HRK-3" manufactured by Hayashi Seisakusho Co., Ltd.) at 30°C using a phenol/tetrachloroethane (volume ratio 1/1) mixed solvent as a solvent.

<Dyeing and degree of exhaustion>

A tubular knitted fabric of the fiber obtained was scoured, then dyed and reductively washed under the following conditions, and then the degree of exhaustion was determined.

(Dyeing)

Dye: Dianix NavyBlue SPH, conc. 5.0% omf
Assistant: Disper TL: 1.0 cc/l, ULTRA MT-N2: 1.0 cc/l
Bath ratio: 1/50
Dyeing temperature × time: 95 to 100°C × 40 minutes

(Reductive washing)

Sodium hydroxide: 1.0 g/L
Sodium hydrosulfite: 1.0 g/L
Amiladin D: 1.0 g/L
Bath ratio: 1/50
Reductive washing temperature × time: 80°C × 20 minutes

(Degree of exhaustion)

An original liquid before dyeing and a residual liquid after dyeing were respectively diluted with acetone water (acetone/water = 1/1 mixed solution) to an arbitrary identical factor, each followed by measurement of absorbance, and then a degree of exhaustion was calculated from the formula given below.

Absorbance analyzer: Spectrophotometer HITACHI
HITACHI Model 100-40 Spectrophotometer

$$\text{Degree of exhaustion} = (A-B)/A \times 100 \ (\%)$$

Here, A and B represent the following, respectively.

A: Absorbance of original liquid (acetone water diluted solution)
B: Absorbance of dyeing residual liquid (acetone water diluted solution)

<Dyeing concentration (K/S) >

A reflectance R at the maximum absorption wavelength of a sample knitted fabric was measured after dyeing and then dyeing concentration was calculated from the Kubelka-Munk formula given below.

Spectral reflectance analyzer: Spectrophotometer HITACHI C-2000S Color Analyzer

$$K/S = (1 - R)^2/2R$$

<Color fastness to washing>

Color fastness to washing was measured in accordance with the measurement method of JIS L-0844 (A-2 method).

<Color fastness to light>

Color fastness to light was measured in accordance with the measurement method of JIS L-0842 (black panel temperature: 63°C, third exposure method).

<Fineness>

Fineness was measured in accordance with the measurement method of JIS L-1013.

<Strength at break>

Strength at break was determined from a load-elongation curve produced by using an Instron type tensile tester.

<Elongation at break>

Elongation at break was determined from a load-elongation curve produced by using an Instron type tensile tester.

<Spinnability>

Evaluation of spinnability was carried out in accordance with the following criteria.

A: Spinnability is very good, for example, no breakage of yarn occurred during spinning when spinning was carried out continuously for 24 hours and no fluff or loop occurred on the resulting polyester fiber.
B: Spinnability is almost good although breakage of yarn occurred in a frequency of once or less during spinning when spinning was carried out continuously for 24 hours, and no fluff or loop occurred on the resulting polyester fiber or slight fluff or loop occurred.
C: Spinnability is poor because breakage of yarn occurred up to three times during spinning when spinning was carried out continuously for 24 hours.
D: Spinnability is very poor because breakage of yarn occurred more than three times during spinning when spinning was carried out continuously for 24 hours.

<Retention of strength>

A tubular knitted fabric of the fiber obtained was scoured and it was then subjected to alkali weight loss under the conditions given below until the weight loss ratio reached 15%, the tubular knits before and after the treatment were each raveled and strength at break was measured from a load-elongation curve by using an Instron type tensile tester, and retention of strength was represented as a ratio of strength at break (retention ratio) calculated from the formula given below.

$$\text{Retention of strength} = B/A \times 100 \ (\%)$$

Here, A and B represent the following, respectively.

A: Strength at break (cN/dtex) of a yarn produced by raveling a tubular knitted fabric without alkali weight loss treatment
B: Strength at break (cN/dtex) of a yarn produced by splitting a tubular knitted fabric after 15% alkali weight loss treatment

(Alkali weight loss)

Sodium hydroxide: 40 g/L

Alkali weight loss temperature × time: 95 to 100°C ×
arbitrary time (weight loss ratio = 15%)

(Example 1)

A polyester resin polymer having the composition shown in Table 1 was obtained by performing a transesterification reaction and a polycondensation reaction using ethylene glycol, prescribed additives, and total carboxylic acid components containing, of the dicarboxylic acid component, 91 mol% of terephthalic acid and also containing 6.0 mol% of 1,4-cyclohexanedicarboxylic acid and 3.0 mol% of adipic acid. The glass transition temperature and the crystallization temperature of this raw material were measured to be 72°C and 144°C, respectively. Threads were spun out based on this raw material at a spinning temperature of 260°C and an output per hole of 1.57 g/minute using a spinneret with 24 holes (hole diameter: 0.20 mm$\phi$). Subsequently, cooling wind with a temperature of 25°C and a humidity of 60% was blown to the spun threads at a rate of 0.5 m/second, thereby cooling the threads to 60°C or lower. Subsequently, the threads were introduced into a tube heater (internal temperature: 185°C) provided at a position 1.2 m below the spinneret, having a length of 1.0 m, an inlet guide diameter of 8 mm, an outlet guide diameter of 10 mm, and an inner diameter of 30 mm$\phi$ and then were stretched within the tube heater. Subsequently, oil was provided to the threads discharged from the tube heater by using an oiling nozzle, followed by winding the threads via two haul-off rollers at a rate of 4500 m/minute, so that polyester filaments of 84T/24f were obtained. The yarn formation conditions and the spinnability at that time and the dyeing fastness properties and the retention of strength of the resulting fibers are shown in Table 1. The degree of exhaustion of the obtained polyester fibers of the present invention was 83% at 95°C and 91% at 100°C and exhibited very good normal temperature dyeability with a dyeing concentration K/S of 25. There were also no problems with their quality with respect to color fastness to washing and color fastness to light. Moreover, they were of good quality with respect to retention of strength after 15% alkali weight loss, which was as high as 96%.

(Examples 2 to 7)

Copolymers having thermal properties shown in Table 1 were obtained in the same manner as in Example 1 except for changing the amounts of the terephthalic acid component, the 1,4-cyclohexanedicarboxylic acid component, and the adipic acid component copolymerized of the polyester resin as shown in Table 1. Moreover, polyester filaments of 84T/24f were obtained by spinning the polymers in the same manner as in Example 1. Properties of the fibers obtained are shown in Table 1. All were good in spinnability, normal pressure dyeabilities (degree of exhaustion, K/S, fastness property), and retention of strength and had quality with no problems.

(Comparative Examples 1 to 6)

Copolymers having thermal properties shown in Table 1 were obtained in the same manner as in Example 1 except for changing the amounts of the terephthalic acid component, the 1,4-cyclohexanedicarboxylic acid component, and the adipic acid component copolymerized of the polyester resin as shown in Table 1. Moreover, polyester filaments of 84T/24f were obtained by spinning the polymers in the same manner as in Example 1. Properties of the fibers obtained are shown in Table 1.

(Comparative Example 7)

A copolymer having thermal properties shown in Table 1 was obtained in the same manner as in Example 1 except for changing the amounts of the terephthalic acid component, the 1,4-cyclohexanedicarboxylic acid component, and the adipic acid component copolymerized of the polyester resin as shown in Table 1 and adjusting the amount of a 5-sodium sulfoisophthalic acid component copolymerized to 2.0 mol%. Moreover, polyester filaments of 84T/24f were obtained by spinning the polymer in the same manner as in Example 1. Properties of the fibers obtained are shown in Table 1.

(Comparative Examples 8 to 9)

Copolymers having thermal properties shown in Table 1 were obtained in the same manner as in Example 1 except for changing the amounts of the terephthalic acid component, the 1,4-cyclohexanedicarboxylic acid component, and the adipic acid component copolymerized of the polyester resin as shown in Table 1 and adjusting the amounts of isophthalic acid components copolymerized as shown in Table 1. Moreover, polyester filaments of 84T/24f were obtained by spinning the polymers in the same manner as in Example 1. Properties of the fibers obtained are shown in Table 1.

[Table 1]

| | Amount copolymerized (mol%) | | | | | Thermal property (°C) | | | Degree of exhaustion (%) | | Dyeing concentration | Spinnability | Color fastness to washing (grade) | | | Color fastness to light (grade) | | Retention of strength (%) |
|---|---|---|---|---|---|---|---|---|---|---|---|---|---|---|---|---|---|---|
| | TA | CHDA | ADA | SIP | IPA | Tg | Tch | ΔT (Tg-Tch) | 95°C | 100°C | k/s | | Discoloration | Attachment Staining | Liquid Staining | Light color dye | Deep color dye | |
| Example 1 | 91.0 | 6.0 | 3.0 | 0.0 | 0.0 | 72 | 144 | 72 | 83 | 91 | 25 | A | 5 | 5 | 5 | 4< | 4< | 96 |
| Example 2 | 87.0 | 10.0 | 3.0 | 0.0 | 0.0 | 70 | 141 | 71 | 84 | 93 | 27 | A | 5 | 5 | 5 | 4< | 4< | 92 |
| Example 3 | 89.0 | 6.0 | 5.0 | 0.0 | 0.0 | 67 | 137 | 70 | 85 | 94 | 27 | A | 5 | 5 | 5 | 4< | 4< | 96 |
| Example 4 | 87.0 | 8.0 | 5.0 | 0.0 | 0.0 | 65 | 133 | 68 | 86 | 95 | 28 | A | 5 | 5 | 5 | 4< | 4< | 94 |
| Example 5 | 85.0 | 10.0 | 5.0 | 0.0 | 0.0 | 63 | 133 | 70 | 88 | 95 | 28 | B | 5 | 5 | 5 | 4< | 4< | 91 |
| Example 6 | 86.0 | 6.0 | 8.0 | 0.0 | 0.0 | 63 | 134 | 71 | 86 | 93 | 27 | B | 5 | 5 | 5 | 4< | 4< | 93 |
| Example 7 | 82.0 | 10.0 | 8.0 | 0.0 | 0.0 | 61 | 126 | 65 | 90 | 97 | 29 | B | 5 | 4-5 | 5 | 4< | 4< | 91 |
| Comparative Example 1 | 94.0 | 6.0 | 0.0 | 0.0 | 0.0 | 73 | 145 | 72 | 66 | 74 | 20 | A | 5 | 4-5 | 5 | 4< | 4< | 97 |
| Comparative Example 2 | 95.0 | 0.0 | 5.0 | 0.0 | 0.0 | 72 | 141 | 69 | 70 | 78 | 21 | A | 5 | 4-5 | 4 | 4< | 4< | 95 |
| Comparative Example 3 | 93.0 | 2.0 | 5.0 | 0.0 | 0.0 | 70 | 139 | 69 | 75 | 84 | 23 | A | 5 | 5 | 4-5 | 4< | 4< | 95 |
| Comparative Example 4 | 77.0 | 18.0 | 5.0 | 0.0 | 0.0 | 60 | 133 | 73 | 94 | 97 | 30 | D | 5 | 4-5 | 4-5 | 4< | 4< | 91 |
| Comparative Example 5 | 93.0 | 6.0 | 1.0 | 0.0 | 0.0 | 74 | 146 | 72 | 70 | 79 | 21 | A | 5 | 5 | 5 | 4< | 4< | 96 |
| Comparative Example 6 | 82.0 | 6.0 | 12.0 | 0.0 | 0.0 | 59 | 130 | 71 | 92 | 97 | 29 | D | 5 | 4 | 4 | 4< | 4< | 92 |

| | Amount copolymerized (mol%) | | | | | Thermal property (°C) | | | Degree of exhaustion (%) | | Dyeing concentration | Spinnability | Color fastness to washing (grade) | | | Color fastness to light (grade) | | Retention ofstrength (%) |
|---|---|---|---|---|---|---|---|---|---|---|---|---|---|---|---|---|---|---|
| | TA | CHDA | ADA | SIP | IPA | Tg | Tch | ΔT (Tg-Tch) | 95°C | 100°C | k/s | | Discoloration | Attachment Staining | Liquid Staining | Light color dye | Deep color dye | |
| Comparative Example 7 | 93.0 | 0.0 | 5.0 | 2.0 | 0.0 | 71 | 143 | 72 | 96 | 97 | 30 | C | 5 | 4-5 | 5 | 4< | 4< | 73 |
| Comparative Example 8 | 88.0 | 6.0 | 0.0 | 0.0 | 6.0 | 75 | 146 | 71 | 77 | 85 | 23 | B | 4 | 3 | 3 | 4< | 4< | 93 |
| Comparative Example 9 | 77.0 | 6.0 | 5.0 | 0.0 | 12.0 | 79 | 151 | 72 | 79 | 90 | 24 | C | 4 | 3 | 3 | 4< | 4< | 92 |

**EP 2 508 657 B1**

In Comparative Example 1, since no adipic acid component was copolymerized, the degree of exhaustion and the dyeing concentration were insufficient, resulting in fiber properties failing to exhibit normal pressure dyeability.

In Comparative Example 2, since no 1,4-cyclohexanedicarboxylic acid component was copolymerized, the degree of exhaustion and the dyeing concentration were insufficient, resulting in fiber properties failing to exhibit normal pressure dyeability.

In Comparative Example 3, since the amount of the 1,4-cyclohexanedicarboxylic acid component copolymerized was small, the degree of exhaustion and the dyeing concentration were insufficient even though a sufficient amount of the adipic acid component was copolymerized, resulting in fiber properties failing to exhibit normal pressure dyeability.

In Comparative Example 4, the amount of the 1,4-cyclohexanedicarboxylic acid component copolymerized was adjusted to 18.0 mol%, thereby adjusting the amount of the terephthalic acid component copolymerized to 77 mol%, which was out of the present composition. As a result, the resulting fibers were poor in spinnability though they were sufficient in degree of exhaustion and dyeing concentration.

In Comparative Example 5, since the amount of the adipic acid component copolymerized was small, the degree of exhaustion and the dyeing concentration were insufficient even though a sufficient amount of the 1,4-cyclohexanedicarboxylic acid component was copolymerized, resulting in fiber properties failing to exhibit normal pressure dyeability.

In Comparative Example 6, since the amount of the adipic acid component copolymerized was large, spinnability was remarkably poor though the degree of exhaustion and the dyeing concentration were high enough.

In Comparative Example 7, no 1, 4-cyclohexanedicarboxylic acid component was copolymerized and 2.0 mol% of the 5-sodium sulfoisophthalic acid component and 5.0 mol% of the adipic acid component were copolymerized, respectively. As a result, the obtained fibers were poor in spinnability and had insufficient fiber properties with a retention of strength of 73% though the fibers were sufficient in degree of exhaustion and dyeing concentration.

In Comparative Example 8, no adipic acid component was copolymerized and the 1,4-cyclohexanedicarboxylic acid component and the isophthalic acid component were copolymerized each in an amount of 6.0 mol%. This resulted in insufficient degree of exhaustion and dyeing concentration and also resulted in fiber properties failing to exhibit normal pressure dyeability with a color fastness to washing of grade 3.

In Comparative Example 9, 12.0 mol% of the isophthalic acid component was copolymerized in addition to the 1,4-cyclohexanedicarboxylic acid component and the adipic acid component and the amount of the terephthalic acid component copolymerized was adjusted to 77 mol%, which was out of the composition of the present invention. As a result, the resulting fibers had fiber properties poor in color fastness to washing and also were poor in spinnability though they were sufficient in degree of exhaustion and dyeing concentration.

**Claims**

1.   A fiber made of a polyester resin, wherein the polyester resin is a copolymer comprising a dicarboxylic acid component and a glycol component; of the dicarboxylic acid component, 80 mol% or more is accounted for by a terephthalic acid component, 4.0 to 12.0 mol% is accounted for by a cyclohexane dicarboxylic acid component, and 2.0 to 8.0 mol% is accounted for by an adipic acid component; and the glycol component contains an ethylene glycol component as a main component thereof.

2.   The polyester fiber according to claim 1, wherein a glass transition temperature (Tg) and a crystallization temperature (Tch) of the polyester resin satisfy the following (a) to (c):

(a) glass transition temperature (Tg): 60 °C $\leq$ Tg $\leq$ 80 °C,
(b) crystallization temperature (Tch): 120 °C $\leq$ Tch $\leq$ 150 °C,
(c) $\Delta$T (Tch - Tg): 50 °C $\leq$ $\Delta$T (Tch - Tg) $\leq$ 80 °C.

3.   The polyester fiber according to claim 1 or 2, which satisfies the following (d) to (f):

(d) a degree of exhaustion at 95 °C is 70% or more and a degree of exhaustion at 100 °C is 90% or more, wherein the degree of exhaustion is measured by respectively diluting the original liquid before dyeing, and the residual liquid after dyeing, with 1:1 acetone:water to an arbitrary identical factor, measuring the absorbance of each using a Hitachi Model 100-40 Spectrophotometer, and calculating the degree of exhaustion by the following formula:

$$\text{Degree of exhaustion} = (A-B)/A \times 100\ (\%)$$

wherein A is the absorbance of the diluted original liquid and B is the absorbance of the diluted dyeing residual liquid,

(e) a color fastness to washing in dyeing at 100 °C of discoloration, that of attachment staining, and that of liquid staining are respectively grade 4 or higher, wherein the color fastness to washing is measured in accordance with the method of JIS L-0844,

(f) a color fastness to light in dyeing at 100 °C is grade 4 or higher, wherein the color fastness to light is measured in accordance with the method of JIS L-0842.

4. The polyester fiber according to any one of claims 1 to 3, wherein a retention of strength at break after a 15% alkali weight loss treatment is 90% or higher.

5. A method for dyeing a polyester fiber, comprising dyeing the polyester fiber according to any one of claims 1 to 4 using a disperse dye under normal pressure at 95 to 100 °C.

**Patentansprüche**

1. Faser aus Polyesterharz, wobei es sich bei Polyesterharz um ein eine Dicarbonsäure- und eine Glykolkomponente umfassendes Copolymer handelt, bei dem es sich bei der Dicarbonsäurekomponente zu 80 mol-% und mehr um eine Terephthalsäurekomponente, zu 4,0 bis 12,0 mol-% um eine Cyclohexandicarbonsäurekomponente und zu 2,0 bis 8,0 mol-% um eine Adipinsäurekomponente handelt und die Glykolkomponente als ihre Hauptkomponente eine Ethylenglykolkomponente enthält.

2. Polyesterfaser nach Anspruch 1, bei der das Polyesterharz bezüglich einer Glasübergangstemperatur (Tg) und einer Kristallisationstemperatur (Tch) den nachstehenden Bedingungen (a) bis (c) entspricht:

   (a) Glasübergangstemperatur (Tg) : 60°C. $\leq$ Tag $\leq$ 80°C,
   (b) Kristallisationstemperatur (Tch): 120° $\leq$ Tch $\leq$ 150°C,
   (c) $\Delta$T (Tch - Tg) : 50°C $\leq \Delta$T (Tch - Tg) $\leq$ 80°C.

3. Polyesterfaser nach Anspruch 1 oder 2, entsprechend den nachstehenden Bedingungen (d) bis (f):

   (d) Ausziehgrad mindestens 70% bei 95°C und mindestens 90% bei 100°C, wobei man zur Ausziehgradbestimmung sowohl die Anfangsflotte vor der Färbung als auch die Restflotte nach der Färbung mit Aceton:Wasser (1:1) beliebig gleich stark verdünnt, jeweils die Extinktion mit dem Spektralfotometer Hitachi Modell 100-40 misst und den Ausziehgrad gemäß der nachstehenden Formel:

$$\texttt{Ausziehgrad = (A-B)/A x 100 (\%)}$$

   wobei A für die Extinktion der verdünnten Anfangsflotte und B für die Extinktion der verdünnten Färberestflotte steht, errechnet,
   (e) Waschechtheit der Färbung bei 100°C mindestens Note 4 jeweils bezüglich Änderung der Farbe, Anschmutzung des Begleitgewebes und Anschmutzung der Flotte, wobei die Waschechtheit der Färbung nach dem Verfahren gemäß JIS L-0844 bestimmt wird,
   (f) Lichtechtheit der Färbung bei 100°C mindestens Note 4, wobei die Lichtechtheit der Färbung nach dem Verfahren gemäß JIS L-0842 bestimmt wird.

4. Polyesterfaser nach einem der Ansprüche 1 bis 3, bei der nach 15%igem Alkalibehandlunggewichtsverlust noch eine mindestens 90%ige Restreißfestigkeit verbleibt.

5. Verfahren zum Färben einer Polyesterfaser, bei dem man die Polyesterfaser gemäß einem der Ansprüche 1 bis 4 drucklos bei 95 bis 100°C mit Dispersionsfarbstoff färbt.

**Revendications**

1. Fibre constituée d'une résine de polyester, dans laquelle la résine de polyester est un copolymère comprenant un constituant acide dicarboxylique et un constituant glycol ; 80 %mol ou plus du constituant acide dicarboxylique correspondant à un constituant acide téréphtalique, 4,0 à 12,0 %mol correspondant à un constituant acide cyclohexanedicarboxylique, et 2,0 à 8,0 %mol correspondant à un constituant acide adipique ; et le constituant glycol contenant un constituant éthylène glycol qui en est le constituant principal.

2. Fibre de polyester selon la revendication 1, dans laquelle une température de transition vitreuse (Tg) et une température de cristallisation (Tch) de la résine de polyester satisfont aux conditions suivantes (a) à (C) :

   (a) température de transition vitreuse (Tg) : 60 °C $\leq$ Tg $\leq$ 80 °C,
   (b) température de cristallisation (Tch) : 120 °C $\leq$ Tch $\leq$ 150 °C,
   (c) $\Delta$T (Tch - Tg) : 50 °C $\leq$ $\Delta$T (Tch - Tg) $\leq$ 80 °C.

3. Fibre de polyester selon la revendication 1 ou 2, qui satisfait aux conditions suivantes (d) à (f) :

   (d) un degré d'épuisement à 95 °C est de 70 % ou plus et un degré d'épuisement à 100 °C est de 90 % ou plus, le degré d'épuisement étant mesuré en diluant respectivement le liquide original avant la teinture, et le liquide résiduel après la teinture, avec 1:1 d'acétone:eau jusqu'à un facteur identique arbitraire, en mesurant l'absorbance de chacun en utilisant un spectrophotomètre Hitachi modèle 100-40, et en calculant le degré d'épuisement par la formule suivante :

   ```
   Degré d'épuisement = (A-B) /A x 100 (%)
   ```

   où A est l'absorbance du liquide original dilué et B est l'absorbance du liquide résiduel de teinture dilué,
   (e) une solidité de couleur au lavage dans la teinture à 100 °C pour la décoloration, la formation de taches par fixation, et la formation de taches par des liquides, respectivement dans la catégorie 4 ou supérieure, la solidité de couleur au lavage étant mesurée selon la méthode JIS L-0844,
   (f) une solidité de couleur à la lumière dans la teinture à 100 °C dans la catégorie 4 ou supérieure, la solidité de couleur à la lumière étant mesurée selon la méthode JIS L-0842.

4. Fibre de polyester selon l'une quelconque des revendications 1 à 3, dans laquelle une rétention de la résistance à la rupture après un traitement causant une perte de poids à un niveau d'alcali de 15 % est de 90 % ou plus.

5. Procédé de teinture d'une fibre de polyester, comprenant la teinture de la fibre de polyester selon l'une quelconque des revendications 1 à 4 en utilisant un colorant dispersé sous une pression normale à une température de 95 à 100 °C.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6184820 A
- JP 2000355831 A
- JP 2003301328 A
- JP 7189036 A